# EUROPÄISCHE PATENTSCHRIFT

(11) **EP 1 291 224 B1**
(45) Veröffentlichungstag und Bekanntmachung des Hinweises auf die Patenterteilung: **29.10.2008**
(21) Anmeldenummer: 02019679.6
(22) Anmeldetag: 04.09.2002
(51) Int. Cl.: B60K 17/04, B60K 7/00

(54) **Endgetriebe**
Final drive
Entraînement final

(30) Priorität: 11.09.2001 US 951846
(43) Veröffentlichungstag der Anmeldung: 12.03.2003
(73) Patentinhaber: DEERE & COMPANY, Moline, Illinois 61265-8098 (US)
(72) Erfinder: Smemo, Ifred Sigmund, Dubuque, IA 52001 (US); Torres Galan, Mariano, Getafe-Madrid (ES)
(74) Vertreter: Magin, Ludwig Bernhard

(56) Entgegenhaltungen:
- EP-A- 0 562 122
- US-A- 3 785 157

## Beschreibung

Die Erfindung betrifft ein Endgetriebe für ein Rad, insbesondere für ein Vorderrad eines Planierfahrzeugs.

Planierfahrzeuge sind große Arbeitsfahrzeuge. Normalerweise sind sie mit einem Hauptrahmen versehen, der über eine vertikale Schwenkachse an einen sich nach vorne erstreckenden Rahmen gekoppelt ist. Der Hauptrahmen ist mit vier angetriebenen Rädern versehen. Zwei in Längsrichtung beabstandete Räder sind auf beiden Seiten des Hauptrahmens angeordnet. Der Hauptrahmen trägt den Verbrennungsmotor zum Antrieb des Planierfahrzeugs. Der sich nach vorne erstreckende Rahmen wird von zwei Rädern getragen und ist mit einer Zugvorrichtung versehen, welche einen Drehkranz enthält. Eine Planierschaufel ist mittels eines Planierschaufelrahmens an den Drehkranz montiert. Die Position der Planierschaufel relativ zum Planierrahmen wird mittels Hydraulikzylinder gesteuert. Über den Drehkranz ist ein Schlitten an den sich nach vorne erstreckenden Rahmen montiert. Der Schlitten ist mit Hydraulikzylinder versehen, um die Position des Drehkranzes relativ zum sich nach vorne erstreckenden Rahmen zu verstellen.

Einige Planierfahrzeuge sind allradgetriebene Maschinen. Hydraulische Radmotoren treiben die Vorderräder an. Die Motoren treten wahlweise mittels hydraulischen Kupplungen mit den Vorderrädern in Eingriff. Die Vorderräder können in einem Übersteuermodus, mit einer höheren Drehzahl als die Hinterräder, in einem Gleichantriebsmodus mit gleicher Drehzahl wie die Hinterräder oder mit einem Untersteuermodus, mit langsamerer Drehzahl als die Hinterräder angetrieben werden. Die Firma John Deere fertigt ein allradgetriebenes Planierfahrzeug der oben beschriebenen Art. Eine Kupplung/Bremse in einem Endgetriebe der Vorderräder wird durch zwölf auf den Umfang angeordnete sich axial erstreckende Kolben angesteuert. Die Ausgestaltung des Endgetriebes erfordert an den Vorderrädern einen andersartigen Aufbau der Radbefestigung als an den Hinterrädern. Dies zwingt den Fahrer dazu, zwei verschiedene Ersatzreifen und Reifenausrüstungen mitzunehmen, wenn er in abgelegenem Gelände arbeitet.

Die US 3,785,157 beschreibt einen hydraulischen Motorantrieb, der über eine druckgesteuerte Kupplung mit einen Rad verbunden wird. Damit offenbart die US 3,785,157 ein Endgetriebe nach dem Oberbegriff des Anspruchs 1.

Einer der Hersteller von allradgetriebenen Planierfahrzeugen setzt statt hydraulisch gesteuerter Kupplungen mechanische Freilaufkupplungen ein.

Die der Erfindung zugrunde liegende Aufgabe wird darin gesehen, ein Endgetriebe der eingangs genannten Art anzugeben, durch welches die vorgenannten Probleme überwunden werden. Insbesondere soll ein kompaktes Endgetriebe geschaffen werden, welches einen großen Bereich an Ausgangsdrehzahlen besitzt. Des Weiteren soll das Endgetriebe innerhalb des Umfanges eines Rades untergebracht werden, welches die gleiche Größe wie die Hinterräder besitzt und die gleichen Befestigungsmaße aufweist.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß enthält das Endgetriebe der eingangs genannten Art ein stationäres Gehäuse, an das ein rotierendes Gehäuse montiert ist. Das rotierende Gehäuse wiederum ist an ein anzutreibendes Rad gekoppelt. Ein Hydraulikmotor mit vorzugsweise zwei Geschwindigkeitsstufen ist an das stationäre Gehäuse montiert. Der Motor treibt das zu einer ersten

Planetenstufe gehörende erste Sonnenrad an, welches wiederum über zwei Planetenräderstufen einen an das rotierende Gehäuse montierten Planetenträger einer zweiten Planetenstufe antreibt.

Ein zu der zweiten Planetenstufe gehörendes zweites Sonnenrad ist koaxial auf dem ersten Sonnenrad montiert, wobei das zweite Sonnenrad frei drehbar auf dem ersten Sonnenrad gelagert ist und nicht durch das erste Sonnenrad angetrieben wird. Außenliegende Nuten/Zähne des zweiten Sonnenrades stehen mit Innennuten eines Planetenträgers der ersten Stufe in Verbindung und treiben diesen an. Des Weiteren werden durch die Außennuten des zweiten Sonnenrades die an dessen Umfang angeordneten Planetenräder der zweiten Stufe angetrieben. Die Planetenräder der zweiten Stufe sind frei drehbar an den an das rotierende Gehäuse gekoppelten Planetenträger der zweiten Stufe montiert und stehen mit einem Hohlrad einer Kupplung/Bremse in Eingriff. Das Hohlrad der Kupplung/Bremse ist mit einer Vielzahl von sich nach innen erstreckenden Kupplungsscheiben wirkverbunden, die mit einem auf dem stationären Gehäuse angeordneten Kupplungslamellenpaket in Eingriff stehen. Ein Hydraulikkolben dient zur Kompression der Kupplungslamellen, wodurch das Hohlrad der Kupplung/Bremse mit dem stationären Gehäuse drehfest verbunden ist. Die durch den Planetenträger der zweiten Stufe an das rotierende Gehäuse gekoppelten Planetenräder der zweiten Stufe treiben den Planetenträger der zweiten Stufe und damit das rotierende Gehäuse und das Rad an.

In einem untersteuernden Modus (Untersteuern) läuft der Motor mit einer Drehzahl, die um einen vorgewählten Betrag geringer ist als die Synchrondrehzahl des Fahrzeugs. Dies führt dazu, dass das Vorderrad den Motor anzutreiben versucht, wodurch ein geringer Einlassdruck am Motor erzeugt und ein Durchrutschen der Kupplung/Bremse hervorgerufen wird. Sobald die Traktion an den Hinterrädern des Fahrzeugs abnimmt und die Hinterräder über den vorgewählten Betrag hinaus durchdrehen, sinkt die Drehzahl der Vorderräder auf Synchrondrehzahl ab, der Einlassdruck am Motor steigt an und das Vorderradantriebssystem liefert zusätzliche Traktion ohne jegliches Zutun des Fahrzeugbetreibers.

Im Gegensatz dazu versuchen die Vorderräder die Hinterräder zu ziehen, wenn ein übersteuernder Modus (Übersteuern) gewählt wird. Dann ist der Einlassdruck am Motor hoch, die Kupplung/Bremse geschlossen und die Vorderräder werden kontinuierlich durch ihre Motoren angetrieben. Wenn das Vorderradantriebssystem ausgeschaltet ist, steht der Motor still, die Kupplung/Bremse ist geöffnet und die Planetenradstufen befinden sich im Leerlauf.

Durch Anwendung der Kupplungs-/Bremsfunktion über das Hohlrad der zweiten Stufe wird ermöglicht, dass der gesamte Getriebestrang mit geringen Drehzahlen mitlaufen kann, was zu geringeren Getriebeverlusten führt, wenn das Vorderradantriebssystem ausgeschaltet ist.

Bei Betrieb im untersteuernden Modus tritt das oben genannte Durchrutschen der Kupplung/Bremse bei geringen Drehzahlen und geringen Drehmomenten mit geringen Schlupf- und Getriebeverlusten auf.

In einer besonders bevorzugten Ausgestaltung der Erfindung wird als Hydraulikmotor ein Schrägachsen-Hydraulikmotor verwendet, mit dem eine kompakte Bauweise und eine optimale konstruktive Ausnutzung des vorhandenen Hohlraumes im Rad erzielt werden kann.

In einer weiteren besonders bevorzugten Ausgestaltung der Erfindung ist der Hydraulikkolben als Ringkolben ausgebildet und kann somit über den gesamten Umfang der Kupplungslamellen wirken. Des Weiteren ist eine hydraulische Leitung bzw. ein Hydraulikkanal enthalten, die bzw. der sich zwischen dem Hydraulikmotor und dem Hydraulikkolben erstreckt und über die der Hydraulikkolben mit einem Motoreinlassdruck beaufschlagt wird. Der zum Betreiben der Kupplung eingesetzte Ringkolben wird durch druckbeaufschlagte Hydraulikflüssigkeit ausgefahren, die durch den innerhalb des stationären Gehäuses ausgebildeten Hydraulikkanal geleitet wird. Die druckbeaufschlagte Hydraulikflüssigkeit wird von dem Motoreinlasskanal aufgenommen.

In einer weiteren bevorzugten Ausgestaltung der Erfindung ist das stationäre Gehäuse mittels zweier Achsschenkelbolzen schwenkbar an ein Joch gekoppelt. Eine derartige Ausbildung schafft Bau- bzw. Montageraum für den antreibenden Hydraulikmotor, so dass eine kompakte Bauweise des gesamten Aufbaus des Endgetriebes erzielt werden kann. Des weiteren können die Achsschenkelbolzen relativ groß ausgebildet sein, so dass ein robustes Tragwerk für das Rad geschaffen wird und hohen statischen und dynamischen Lasten standgehalten werden kann.

In einer weiteren bevorzugten Ausgestaltung der Erfindung ist das rotierende Gehäuse des Endgetriebes an eine Radscheibe geschraubt. Somit kann gewährleistet werden, dass die Befestigungsanordnung des Rades an das Endgetriebe in ähnlicher oder gleicher Weise erfolgen kann wie an den hinteren Antriebsrädern des Fahrzeugs. Auf diese Weise muss der Betreiber des Fahrzeugs nur einen Ersatzradtyp und Reifenaufbau für alle vorhandenen Räder mit sich führen.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: eine perspektivische Ansicht eines Planierfahrzeugs,

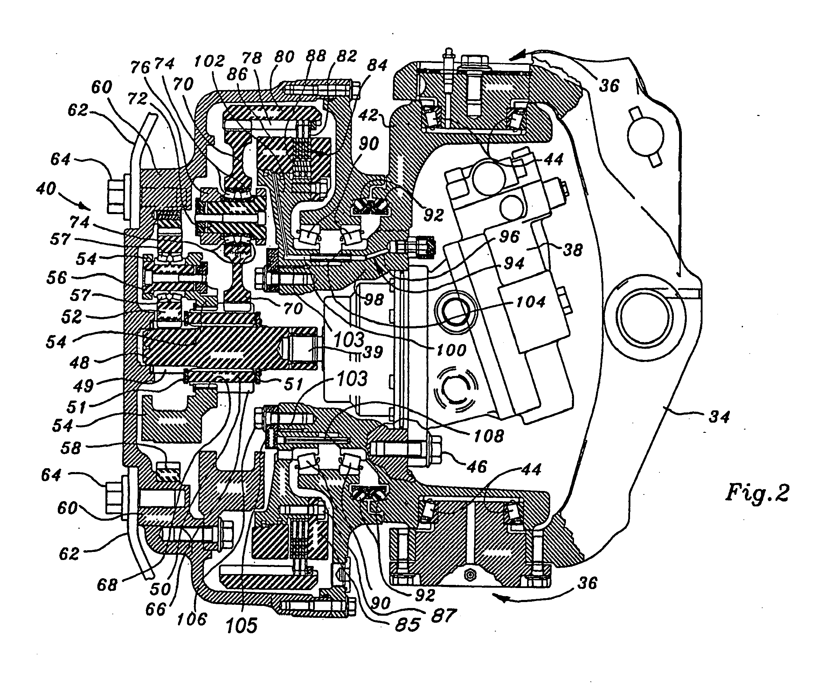

- Fig. 2: eine Querschnittsansicht einer Vorderrad-Endgetriebeanordnung und
- Fig. 3: ein hydraulisches schematisches Schaltbild.

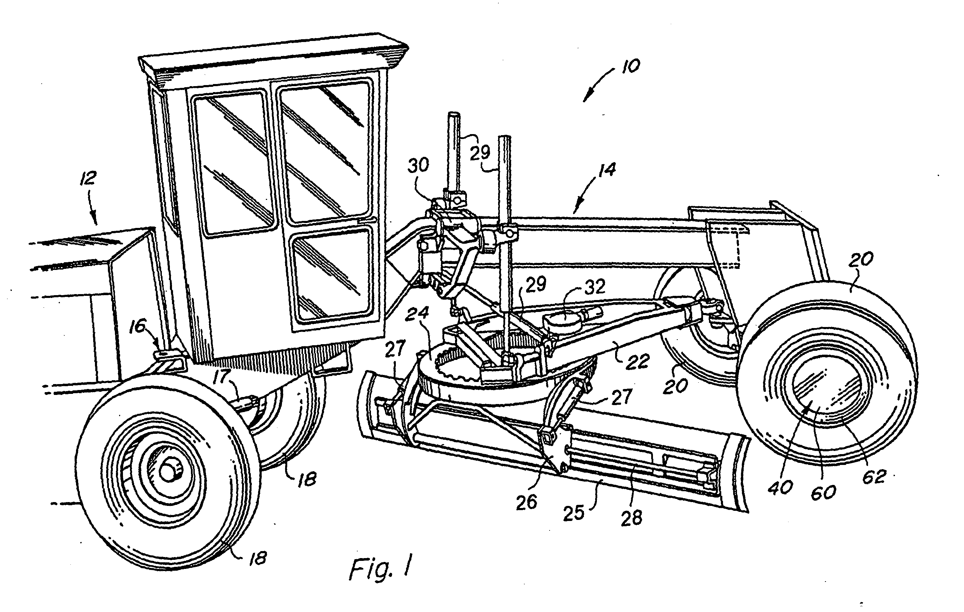

Fig. 1 zeigt eine Planierfahrzeug 10. Das Planierfahrzeug 10 enthält einen Hauptrahmen 12 und einen sich nach vorne erstreckenden Rahmen 14. Ein vertikaler Drehzapfen 16 verbindet die beiden Rahmen 12 und 14 drehbar miteinander. Hydraulikzylinder 17, von denen nur einer gezeigt ist, steuert die Position des vorderen Rahmens 14 relativ zu dem hinteren Rahmen 12. Der hintere Rahmen 12 ist mit vier angetriebenen Rädern 18 versehen, die als ein rechtes und ein linkes Paar angeordnet sind, wobei nur die vorderen angetriebenen Räder der Paare dargestellt sind. Der vordere Rahmen 14 ist mit zwei angetriebenen Rädern 20 versehen. Der vordere Rahmen 14 ist des Weiteren mit einer sich nach hinten erstreckenden Zugvorrichtung 22 versehen, welche einen Drehkranz 24 enthält. Mittels eines Schaufelrahmens 26 ist eine Planierschaufel 25 an den Drehkranz 24 montiert. Hydraulikzylinder 27 steuern eine Kippposition der Planierschaufel 25 relativ zum Schaufelrahmen 26. Die seitliche Position der Planierschaufel 25 relativ zum Schaufelrahmen 26 wird durch einen Hydraulikzylinder 28 gesteuert, von dem nur das Zylinderstangenende dargestellt ist. An einen Schlitten 30 montierte Hydraulikzylinder 29 steuern die Position der Zugvorrichtung 22 relativ zum vorderen Rahmen 14. Der Drehkranz 24 ist durch einen Drehkranzmotor relativ zur Zugvorrichtung 22 drehbar positionierbar.

Die Vorderräder 20 werden durch ein zweistufiges Planetenendgetriebe 40 angetrieben, welches über ein Joch 34 mit dem vorderen Rahmen 14 wirkverbunden ist. Mittels vertikal ausgerichteter geschmierter Achsschenkelbolzen 36 ist das Endgetriebe 40 schwenkbar an das Joch 34 gekoppelt. Die Achsschenkelbolzen 36 definieren eine vertikale Schwenkachse. Die Achsschenkelbolzen 36 erstrecken sich von den Armen des Jochs 34 aus nach innen und stehen mit einem stationären Gehäuse 42 des Endgetriebes 40 in Eingriff. Die Achsschenkelbolzen 36 sind relativ groß ausgebildet und enthalten Kegelrollenlager 44, so dass bei angemessenem Bauraum für einen Hydromotor 38 ein robustes Tragwerk gebildet wird, welches den statischen und dynamischen Lasten standhalten kann.

Der Hydromotor 38, ein Schrägachsenmotor mit zwei Geschwindigkeitsstufen, ist durch Montagebolzen 46 an das stationäre Gehäuse 42 angeflanscht. Der Hydromotor 38 kann ein von Sauer-Sundstrand vertriebener Sauer-Schrägachsenmotor der Serie 51 sein. Die Antriebsachse 39 des Motors 38 ist wirkend mit einem ersten Sonnenrad 48 verbunden. Rotierende Bewegungen der Antriebsachse 39 drehen das Sonnenrad 48. Ein zweites Sonnenrad ist als Doppelsonnenrad 50 ausgebildet und hat zwei Abschnitte. Es ist frei drehbar auf dem ersten Sonnenrad 48 gelagert. Das zweite Sonnenrad 50 hat keine Innennuten, die mit dem ersten Sonnenrad 48 in Eingriff treten. Ebenso hat das erste Sonnenrad 48 im Bereich des zweiten Sonnenrades 50 keine Außennuten. Das zweite Sonnenrad 50 wird zwischen zwei Scheiben 51 axial gehalten.

Das freie Ende des ersten Sonnenrades 48 ist zum Antreiben von auf den Umfang angeordnete Planetenräder 52 mit Außennuten 49 versehen. Die Planetenräder 52 sind mittels Kegelrollenlager 57 drehbar auf Achszapfen 56 eines Planetenträgers 54 gelagert. Die Planetenräder 52 stehen auch mit einem Hohlrad 58 in Eingriff, welches an einem rotierbaren Gehäuse 60 befestigt ist. Das rotierbare Gehäuse wiederum ist mittels Befestigungsbolzen 64 an eine Radscheibe 62 angeflanscht.

Das zweite Sonnenrad 50 ist mit Außennuten 66 versehen, welche sowohl mit Innennuten 68 des Planetenträgers 54 als auch mit Planetenrädern 70 einer Bremse/Kupplungs-Einrichtung in Eingriff stehen. Die Bremse/Kupplungs-Planetenräder 70 sind über Kegelrollenlager 74 frei drehbar auf Achszapfen 72 montiert. Die Achszapfen 72 sind an einen inneren Teil 76 des rotierbaren Gehäuses 60 montiert. Die Bremse/Kupplungs-Planetenräder 70 stehen auch mit Innennuten 78 eines Hohlrades 80 der Bremse/Kupplungs-Einrichtung in Eingriff. Die Innennuten 78 stehen des Weiteren mit sich nach innen erstreckenden und mit einem Kupplungslamellenpaket 84 in Kontakt tretende Kupplungsscheiben 82 in Eingriff. Das Kupplungslamellenpaket 84 ist axial zwischen einer durch Montagebolzen 87 am stationären Gehäuse 42 angeflanschten ringförmigen Platte 85 und einem Ringkolben 86 angeordnet. Die ringförmige Platte 85 formt dabei einen Teil des stationären Gehäuses 42. Durch mehrere auf dem Umfang angeordnete sich axial ausdehnende Spiralfedern 88 ist der Ringkolben 86 in eine eingefahrene Position vorgespannt, so dass das Kupplungslamellenpaket 84 kein Drehmoment überträgt.

Das rotierbare Gehäuse 60 ist über Kegelrollenlager 90 drehbar auf dem stationären Gehäuse 42 gelagert. Zwischen dem rotierbaren Gehäuse 60 und dem stationären Gehäuse 42 sind Dichtungen 92 angeordnet.

Druckbeaufschlagte Hydraulikflüssigkeit aus dem Einlasskanal des Motors 38 wird über eine Hydraulikleitung 94 zum Ringkolben 86 geführt. Die Hydraulikleitung 94 beinhaltet drei Abschnitte: Der erste Abschnitt 96 ist eine in einem ersten Teil 98 des stationären Gehäuses 42 ausgebildete Bohrung, der dritte Abschnitt 100 ist ebenfalls eine Bohrung, die in einem zweiten Teil 102 des stationären Gehäuses 42 ausgebildet ist, und der zweite mittlere Abschnitt 104 ist ein kleines sich zwischen dem ersten Abschnitt 96 und dem dritten Abschnitt 100 erstreckendes Rohr. Das kleine Rohr dient dazu, leichte Fluchtungsfehler zwischen dem ersten und dem zweiten Teil 98 und 102 des stationären Gehäuses 42 auszugleichen. Der zweite Teil 102 wird mittels einer Druckscheibe 105 axial gehalten. Die Druckscheibe 105 ist mittels Montagebolzen 106 an den ersten Teil 98 montiert. Der zweite Teil 102 ist mittels eines sich zwischen den Teilen 98 und 102 erstreckenden Passstifts 108 rotatorisch ausgerichtet. Der zweite Teil 102 wird durch Verkeilungen 103 gegen Verdrehen gesichert.

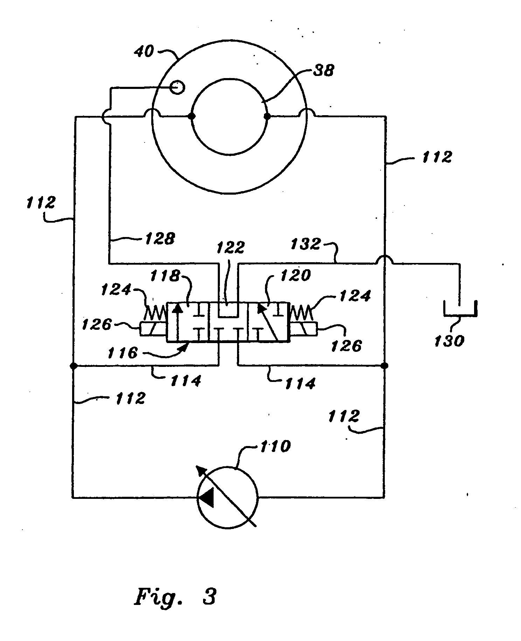

Der Schrägachsen-Hydraulikmotor 38 wird von einer verstellbaren Verdrängungspumpe 110 mit druckbeaufschlagter Flüssigkeit versorgt, wie es in Fig. 3 dargestellt ist. Die Positionierung einer Taumelscheibe in der verstellbaren Verdrängungspumpe 110 wird durch eine elektronische Steuerung gesteuert. Durch die Positionierung der Taumelscheibe wird nicht nur der Volumenstrom der Flüssigkeit, sondern auch die Durchflussrichtung eingestellt. Die elektronische Steuerung betätigt die Pumpe 110 entsprechend einem von einem Betreiber ausgewählten Ansprechverhalten. Druckbeaufschlagte, abströmende Hydraulikflüssigkeit wird über Versorgungs-/Rücklaufleitungen 112 dem Motor 38 zugeführt. Zwischen den Versorgungs-/Rücklaufleitungen 112 und einem Dreiwegekoppelventil 116 erstrecken sich Hydraulikleitungen 114. Das Dreiwegekoppelventil 116 enthält eine Zulaufstellung 118, eine Rücklaufstellung 120 und eine Neutralstellung 122. Das Koppelventil 116 steht zwischen Federn 124 im Gleichgewicht. Die Position des Koppelventils 116 wird über elektrisch angesteuerte Magnetspulen 126 gesteuert. Wenn das Koppelventil 116 sich in seiner Zulaufstellung 118 oder Rücklaufstellung 120 befindet, wird druckbeaufschlagte Flüssigkeit durch die Leitung 128 zur Hydraulikleitung 94 geleitet, um den Ringkolben 86 auszufahren und die Kupplung zu schließen. In seiner Neutralstellung 122 ist die Leitung 128 mit einem Sumpf 130 über die Abführleitung 132 verbunden.

Über die Hydraulikleitungen 128 und 94 wirkt der Einlassdruck am Motor 38 auf den Ringkolben 86. Somit regelt der Einlassdruck am Motor 38 die Aktivierung und Deaktivierung des Kupplungslamellenpakets 84. Ein Steuersystem erlaubt dem Betreiber verschiedene Stufen zum Ansprechverhalten auszuwählen, das heißt Untersteuern oder Übersteuern. Bei einem ausgewählten negativen Ansprechverhalten (Untersteuern), wird der Motor 38 mit einer Drehzahl betrieben, die geringer ist, als eine Synchrondrehzahl der hinteren Antriebsräder 18. Der Boden, der in Kontakt mit dem Rad 20 steht, treibt das Rad 20 mit einer höheren Drehzahl an, als es vom Motor 38 angetrieben wird. Beim Betreiben des Motors 38, verursacht das Rad 20 einen Einlassdruckabfall am Motor und ein Durchrutschen des Kupplungslamellenpakets 84. Sobald die hinteren Antriebsräder 18 an Traktion verlieren und über die vorausgewählte Drehzahldifferenz hinaus durchdrehen, steigt der Einlassdruck am Motor 38 an und schließt das Kupplungslamellenpaket 84, demzufolge der Motor 38 das Rad 20 antreibt. Bei einem positiven Ansprechverhaltensmodus (Übersteuern) werden die Vorderräder 20 gezwungen, mit einer höheren Drehzahl zu drehen als die Hinterräder 18. In diesem Modus ist der Einlassdruck am Motor 38 hoch und schließt das Kupplungslamellenpaket 84, demzufolge ein andauernder Antrieb vorherrscht.

Die Kupplungsfunktion wird durch das Kupplungslamellenpaket 84 umgesetzt, indem das Bremse/Kupplungs-Hohlrad 80 gegenüber dem stationären Gehäuse 42 gesperrt wird. Das Öffnen der Kupplung in diesem Bereich der Antriebsübersetzung führt nicht nur zu einem Durchrutschen der Bremse/Kupplung bei geringen Drehmomenten und Drehzahlen, und damit zu geringen Verlustleistungen, es ermöglicht es auch, dass die gesamte Antriebsübersetzung bei relativ geringen Drehzahlen mitläuft, was zur Folge hat, dass die Getriebeverluste gering sind, wenn der Vorderradantrieb ausgeschaltet ist und die gesamte Antriebsübersetzung leer läuft. Diese Funktion ist von besonderer Wichtigkeit, da Planierfahrzeuge normalerweise über lange Strecken mit hohen Geschwindigkeiten überführt werden.

## Patentansprüche

1. Endgetriebe für ein Rad (20), mit
- einem stationären Gehäuse (42),
- einem an das stationäre Gehäuse (42) montierten Hydraulikmotor (38),
- einem an das stationäre Gehäuse (42) drehbar montierten, rotierenden Gehäuse (60),
- einem durch den Hydraulikmotor (38) angetriebenen und mit Außennuten (49) versehenen ersten Sonnenrad (48),
- auf dem Umfang angeordneten und mit den Außennuten (49) des Sonnenrads (48) in Eingriff stehenden Planetenrädern (52), wobei die Planetenräder (52) drehbar auf einem mit Innennuten (68) versehenen Planetenträger (54) montiert sind,
- einem am rotierenden Gehäuse (60) montierten Hohlrad (58), wobei das Hohlrad (58) mit den Planetenrädern (52) in Eingriff steht,
- einem frei drehbar gelagerten zweiten Sonnenrad (50), dessen Außennuten (66) mit den Innennuten (68) des Planetenträgers (54) in Eingriff stehen,
- auf dem Umfang angeordnete Kupplung/Bremse-Planetenräder (70), die mit den Außennuten (66) des zweiten Sonnenrads (50) in Eingriff stehen, wobei die Kupplung/Bremse-Planetenräder (70) frei drehbar an das rotierende Gehäuse (60) montiert sind,
- einem gegenüber dem stationären Gehäuse (42) verdrehbaren und mit Innennuten (78) versehenen Kupplung/Bremse-Hohlrad (80), welches mit den Kupplung/Bremse-Planetenrädern (70) in Eingriff steht,
- einer hydraulischen Kupplung/Bremse-Einrichtung, die wirksam zwischen dem Kupplung/Bremse-Hohlrad (80) und dem stationären Gehäuse (42) angeordnet ist, **dadurch gekennzeichnet, dass**
- sich zwischen dem Kupplung/Bremse-Hohlrad (80) und einem Kupplungslamellenpaket (84) Kupplungsscheiben (82) erstrecken, wobei das Kupplungslamellenpaket (84) an das stationäre Gehäuse (42) montiert ist und ein das Kupplungslamellenpaket (84) betätigender Hydraulikkolben (86) vorgesehen ist und wobei die Innennuten (78) mit sich nach innen erstreckenden und mit dem Kupplungslamellenpaket (84) in Kontakt tretenden Kupplungsscheiben (82) in Eingriff stehen.

2. Endgetriebe nach Anspruch 1, **dadurch gekennzeichnet, dass** der Hydraulikmotor (38) ein Schrägachsen-Hydraulikmotor ist.

3. Endgetriebe nach Anspruch 2, **dadurch gekennzeichnet, dass** der Hydraulikkolben (86) ein Ringkolben ist.

4. Endgetriebe nach einem der vorherigen Ansprüche, **dadurch gekennzeichnet, dass** sich eine hydraulische Leitung (94, 128) zwischen dem Hydraulikmotor (38) und der hydraulischen Kupplung/Bremse erstreckt und die Kupplung/Bremse, insbesondere den Hydraulikkolben (86) mit einem Motoreinlassdruck beaufschlagt.

5. Endgetriebe nach einem der vorherigen Ansprüche,
**dadurch gekennzeichnet, dass** das stationäre Gehäuse (42) mittels zweier Achsschenkelbolzen (36) schwenkbar an ein Joch (34) gekoppelt ist.

6. Endgetriebe nach einem der vorherigen Ansprüche, **dadurch gekennzeichnet, dass** das rotierende Gehäuse (60) mit einer Radscheibe (62) verschraubbar ist.

7. Endgetriebe nach einem der vorherigen Ansprüche, **dadurch gekennzeichnet, dass** das zweite Sonnenrad (50) frei drehbar auf dem ersten Sonnenrad (48) gelagert ist.

## Claims

1. Final drive for a wheel (20), having
- a stationary housing (42),
- a hydraulic motor (38) which is mounted on the stationary housing (42),
- a rotating housing (60) which is rotatably mounted on the stationary housing (42),
- a first sun gear (48) which is driven by the hydraulic motor (38) and which is provided with external grooves (49),
- planet gears (52) which are arranged on the periphery and which are in engagement with the external grooves (49) of the sun gear (48), with the planet gears (52) being rotatably mounted on a planet carrier (54) which is provided with internal grooves (68),
- a ring gear (58) which is mounted on the rotating housing (60), with the ring gear (58) being in engagement with the planet gears (52),
- a second sun gear (50) which is mounted so as to be freely rotatable and whose external grooves (66) are in engagement with the internal grooves (68) of the planet carrier (54),
- clutch/brake planet gears (70) which are arranged on the periphery and which are in engagement with the external grooves (66) of the second sun gear (50), with the clutch/brake planet gears (70) being mounted on the rotating housing (60) so as to be freely rotatable,
- a clutch/brake ring gear (80) which is rotatable with respect to the stationary housing (42) and which is provided with internal grooves (78) and which is in engagement with the clutch/brake planet gears (70),
- a hydraulic clutch/brake device which is arranged so as to act between the clutch/brake ring gear (80) and the stationary housing (42), **characterized in that**
- clutch discs (82) extend between the clutch/brake ring gear (80) and a clutch plate pack (84), with the clutch plate pack (84) being mounted on the stationary housing (42), and with a hydraulic piston (86) which actuates the clutch plate pack (84) being provided, and with the internal grooves (78) being in engagement with inwardly extending clutch discs (82) which come into contact with the clutch plate pack (84).

2. Final drive according to Claim 1, **characterized in that** the hydraulic motor (38) is an oblique-axle hydraulic motor.

3. Final drive according to Claim 2, **characterized in that** the hydraulic piston (86) is an annular piston.

4. Final drive according to one of the preceding claims, **characterized in that** a hydraulic line (94, 128) extends between the hydraulic motor (38) and the hydraulic clutch/brake and acts on the clutch/brake, in particular the hydraulic piston (86), with a motor inlet pressure.

5. Final drive according to one of the preceding claims, **characterized in that** the stationary housing (42) is pivotably coupled by means of two kingpins (36) to a yoke (34).

6. Final drive according to one of the preceding claims, **characterized in that** the rotating housing (60) can be screwed to a wheel disc (62).

7. Final drive according to one of the preceding claims, **characterized in that** the second sun gear (50) is mounted on the first sun gear (48) so as to be freely rotatable.

## Revendications

1. Engrenage de sortie pour une roue (20), comportant
- un carter stationnaire (42),
- un moteur hydraulique (38) monté sur le carter stationnaire (42),
- un carter rotatif (60), monté rotatif contre le carter stationnaire (42),
- une première roue solaire (48), actionnée par le moteur hydraulique (38) et munie de gorges extérieures (49),
- des pignons satellites (52), disposés sur le pourtour et engrenant avec les gorges extérieures (49) de la roue solaire (48), les pignons satellites (52) étant montés rotatifs sur un porte-satellites (54) muni de gorges intérieures (68),
- une couronne (58) montée sur le carter rotatif (60), ladite couronne (58) engrenant avec les pignons satellites (52),
- une deuxième roue solaire (50) montée librement rotative, dont les gorges extérieures (66) engrènent avec les gorges intérieures (68) du porte-satellites (54),
- des pignons satellites (70) d'embrayage et de frein, qui sont disposés sur le pourtour et qui engrènent avec les gorges extérieures (66) de la deuxième roue solaire (50), les pignons satellites (70) d'embrayage et de frein étant montés librement rotatifs sur le carter rotatif (60),
- une couronne (80) d'embrayage et de frein, qui comporte des gorges intérieures (78) et est apte à tourner par rapport au carter stationnaire (42) et qui engrène avec les pignons satellites (70) d'embrayage et de frein,
- un dispositif hydraulique d'embrayage et de freinage, qui est monté de manière active entre la couronne d'embrayage et de frein (80) et le carter stationnaire (42), **caractérisé en ce que**
- entre la couronne d'embrayage et de frein (80) et un bloc de lamelles d'embrayage (84) sont disposés des disques d'embrayage (82), ledit bloc de lamelles d'embrayage (84) étant monté sur le carter stationnaire (42) et un piston hydraulique (86) étant prévu pour actionner le bloc de lamelles d'embrayage (84), et les gorges intérieures (78) engrenant avec les disques d'embrayage (82) qui s'étendent vers l'intérieur et entrent en contact avec le bloc de lamelles d'embrayage (84).

2. Engrenage de sortie selon la revendication 1, **caractérisé en ce que** le moteur hydraulique (38) est un moteur hydraulique à axe incliné.

3. Engrenage de sortie selon la revendication 2, **caractérisé en ce que** le piston hydraulique (86) est un piston annulaire.

4. Engrenage de sortie selon l'une quelconque des revendications précédentes, **caractérisé en ce qu'**une conduite hydraulique (94, 128) s'étend entre le moteur hydraulique (38) et le frein, et l'embrayage hydraulique et le frein et l'embrayage sollicitent en particulier le piston hydraulique (86) avec une pression d'admission du moteur.

5. Engrenage de sortie selon l'une quelconque des revendications précédentes, **caractérisé en ce que** le carter stationnaire (42) est couplé de manière pivotante à une entretoise (34) au moyen de deux pivots de fusée d'essieu (36).

6. Engrenage de sortie selon l'une quelconque des revendications précédentes, **caractérisé en ce que** le carter rotatif (60) peut être vissé à un disque de roue (62).

7. Engrenage de sortie selon l'une quelconque des revendications précédentes, **caractérisé en ce que** la deuxième roue solaire (50) est montée librement rotative sur la première roue solaire (48).
